# FASCICULE DE BREVET EUROPEEN

(11) **EP 2 630 768 B1**
(45) Date de publication et mention de la délivrance du brevet: **02.01.2019**
(21) Numéro de dépôt: 11787731.6
(22) Date de dépôt: 21.10.2011
(51) Int. Cl.: H04L 29/06

(54) **TRAITEMENT DE DONNEES POUR LE TRANSFERT OU LA REPLICATION D'UN FLUX MEDIA**
VERARBEITUNG VON DATEN ZUR ÜBERTRAGUNG ODER SPIEGELUNG EINES MEDIENSTROMS
PROCESSING DATA FOR TRANSFERRING OR MIRRORING A MEDIA STREAM

(30) Priorité: 22.10.2010 FR 1058655
(43) Date de publication de la demande: 28.08.2013
(73) Titulaire: Orange, 75015 Paris (FR)
(72) Inventeur: MOUQUET, Antoine, F-92400 Courbevoie (FR); BARANKANIRA, Delphin, F-92160 Antony (FR)
(74) Mandataire: Cabinet Plasseraud
(86) Numéro de dépôt international: PCT/FR2011/052463
(87) Numéro de publication internationale: WO 2012/052693

(56) Documents cités:
- EP-A1- 2 093 968
- US-A1- 2008 117 451

## Description

La présente invention vise un traitement de données pour la communication de données sur un réseau informatique.

En particulier, la présente invention vise un traitement de données pour limiter, lors d'une session multimédia impliquant un premier terminal utilisateur, des opérations de transfert ou de réplication d'un flux média vers d'autres terminaux utilisateur.

L'expression réseau informatique doit être comprise avec un sens large et le réseau informatique peut notamment être un réseau de téléphonie mobile, par exemple celui dit de troisième génération (3GPP).

Le développement des télécommunications a permis à un nombre croissant d'utilisateurs de disposer d'un ou plusieurs terminaux média, tels que des téléphones mobiles, des ordinateurs ou des assistants personnels numériques, via lesquels ils peuvent établir des sessions multimédia.

Pour permettre la communication entre des réseaux informatiques opérant sous différents protocoles, une architecture standardisée dite IMS (pour Internet Protocol Multimedia Subsystem) a été développée. L'architecture IMS est une architecture multimédia ouverte qui utilise le protocole SIP (Session Initiation Protocol).

L'invention concerne donc plus particulièrement un réseau informatique opérant sous le protocole de signalisation SIP (Session Initiation Protocol). Le protocole SIP est un protocole normalisé qui permet d'établir, de modifier et de terminer des sessions multimédia. Le protocole SIP est un protocole du type requête/réponse dans le sens où, pour chaque message émis par une source, il y a au moins une réponse associée du destinataire confirmant la réception du message envoyé.

Un utilisateur a par ailleurs la possibilité de souscrire à un service de transfert inter-terminal permettant, lors d'une session multimédia, de réaliser des opérations de transfert ou de réplication d'un flux média vers d'autres terminaux. Lors de l'établissement d'une session multimedia entre un terminal d'un utilisateur ayant souscrit au service de transfert inter-terminal et un correspondant, un serveur dit SCC AS (Service Centralization and Continuity Application Server) fait l'intermédiaire entre le terminal et le correspondant, de façon à permettre par la suite les opérations de transfert, c'est-à-dire de remplacement du terminal par un autre terminal, et de réplication, c'est-à-dire de copie d'un flux média envoyé au terminal vers un autre terminal. Le correspondant peut être par exemple un terminal d'un autre utilisateur ou un serveur d'application. L'opération de transfert ou de réplication est réalisée de manière transparente pour le correspondant, qui n'est donc pas informé de ces opérations et n'a pas de contrôle dessus.

C'est notamment le cas, à titre d'exemple, dans le document EP 2 093 968 dans lequel le correspondant n'a pas de contrôle sur le transfert d'une session multimédia d'un premier terminal utilisateur à un deuxième terminal utilisateur.

Cependant, le propriétaire du contenu délivré par un serveur d'application à travers la session multimédia peut vouloir contrôler à quels terminaux utilisateurs ce contenu est délivré, par exemple pour empêcher la délivrance du contenu à de multiple terminaux, et/ou à certains types de terminaux, et/ou à des terminaux appartenant à différents utilisateurs.

La présente invention vient améliorer la situation.

A cet effet, l'invention propose un procédé de traitement de données pour limiter, lors d'une session multimédia impliquant un premier terminal utilisateur, des opérations de transfert ou de réplication d'un flux média vers d'autres terminaux utilisateurs. Le procédé comprend en particulier des étapes consistant à :
a) recevoir une requête de transfert ou de réplication d'un flux média émise par le premier terminal utilisateur, la requête contenant des informations relatives à un deuxième terminal utilisateur, destinataire du transfert ou de la réplication, et des informations relatives au flux média à transférer ou à répliquer,
b) comparer les informations relatives au deuxième terminal utilisateur et au flux média à transférer ou à répliquer avec un ensemble d'éléments d'information relatifs à des opérations de transfert ou de réplication autorisées pour la session multimédia, et déterminer, en fonction de la comparaison, si l'opération de transfert ou de réplication est autorisée, et
c) lorsque l'opération de transfert ou de duplication est autorisée, réaliser l'opération de transfert ou de réplication du flux média vers ledit deuxième terminal utilisateur,
d) une étape préalable d'établissement d'une session multimédia entre le premier terminal utilisateur et un correspondant, l'étape préalable comportant une opération de réception d'un message, émis par le correspondant, contenant un ensemble d'éléments d'information relatifs à des opérations de transfert ou de réplication autorisées pour la session multimédia.

Le procédé permet ainsi de limiter les opérations de transfert ou de réplication d'un flux média autorisées, c'est-à-dire d'exercer un contrôle sur la diffusion d'un contenu multimédia, même après qu'une session multimédia ait été établie.

Ainsi, le propriétaire d'un serveur d'application peut exercer un contrôle sur la diffusion d'un contenu multimédia délivré par le serveur d'application, bien que celui-ci ne participe pas aux étapes du procédé de transfert ou de réplication.

Le message peut être un message SIP, l'ensemble d'éléments d'information étant inséré dans le message par le biais d'un en-tête SIP. En variante, l'ensemble d'éléments d'information peut être inséré dans le message sous la forme d'un document XML.

L'établissement de la session peut être initié par le premier terminal utilisateur, l'ensemble d'éléments d'information étant inséré dans un message SIP de type « 200 OK ». En variante, l'établissement de la session peut être initié par le correspondant, l'ensemble d'éléments d'information étant inséré dans un message SIP de type « INVITE ».

L'ensemble d'éléments d'information peut comprendre un élément d'information pour interdire le transfert et la réplication du flux média vers un autre terminal, et/ou un élément d'information pour interdire le transfert et la réplication du flux média vers un autre terminal appartenant à un autre utilisateur, et/ou un élément d'information pour limiter le transfert et la réplication du flux média vers un terminal d'un type prédéterminé, et/ou un élément d'information pour limiter le nombre de terminaux vers lesquels le flux média peut être répliqué, et/ou un élément d'information pour limiter le nombre d'utilisateurs vers lesquels le flux média peut être répliqué.

Un élément d'information peut être associé à un flux média prédéterminé, l'ensemble d'éléments d'information pouvant contenir des éléments d'information respectivement associés à plusieurs flux média de la session multimédia.

Le procédé précité peut être exécuté par un programme informatique. L'invention vise donc également un programme informatique comportant des instructions pour la mise en oeuvre du procédé précité lorsque ce programme est exécuté par un processeur.

Le procédé peut être mis en oeuvre par un dispositif adapté. L'invention vise donc également un serveur configuré pour limiter, lors d'une session multimédia impliquant un premier terminal utilisateur, des opérations de transfert ou de réplication d'un flux média vers d'autres terminaux utilisateurs. Le serveur comprend :
- un module de réception configuré pour recevoir une requête de transfert ou de réplication d'un flux média émise par le premier terminal utilisateur, la requête contenant des informations relatives à un deuxième terminal utilisateur, destinataire du transfert ou de la réplication, et des informations relatives au flux média à transférer ou à répliquer,
- un module de traitement configuré pour comparer les informations relatives au deuxième terminal utilisateur et au flux média à transférer ou à répliquer avec un ensemble d'éléments d'information relatifs à des opérations de transfert ou de réplication autorisées pour la session multimédia, et pour déterminer, en fonction de la comparaison, si l'opération de transfert ou de réplication est autorisée, et
- un module de transfert et de réplication configuré pour réaliser l'opération de transfert ou de réplication du flux média vers le deuxième terminal utilisateur lorsque l'opération a été déterminée comme autorisée,
- le module de réception étantconfiguré pour recevoir, lors de l'établissement d'une session multimédia entre le premier terminal utilisateur et un correspondant, un message, émis par le correspondant, contenant un ensemble d'éléments d'information relatifs à des opérations de transfert ou de réplication autorisées pour la session multimédia, le serveur comportant un module de mémoire configuré pour mémoriser l'ensemble des éléments d'information.

L'invention vise également un système comportant un serveur tel que précité, et un premier terminal utilisateur comportant un module d'émission configuré pour émettre, à destination du serveur, une requête de transfert ou de réplication d'un flux média, la requête contenant des informations relatives à un deuxième terminal utilisateur, destinataire du transfert ou de la réplication.

Le système peut en outre comporter un deuxième serveur comportant un module d'émission configuré pour émettre, lors de l'établissement d'une session multimédia entre le premier terminal utilisateur et le deuxième serveur, un message contenant un ensemble d'éléments d'information relatifs à des opérations de transfert ou de réplication autorisées pour la session multimédia.

D'autres caractéristiques et avantages de l'invention apparaîtront encore à la lecture de la description qui va suivre. Celle-ci est purement illustrative et doit être lue en regard des dessins annexés sur lesquels :
- la Figure 1 est une vue schématique simplifiée d'un réseau informatique selon un mode de réalisation de l'invention ;
- la Figure 2 est un schéma fonctionnel montrant un premier terminal utilisateur du réseau informatique de la figure 1 ;
- la Figure 3 est un schéma fonctionnel montrant un premier serveur d'application du réseau informatique de la figure 1 ;
- la Figure 4 est un schéma fonctionnel montrant un deuxième serveur d'application du réseau informatique de la figure 1 ;
- la Figure 5 est un organigramme illustrant les étapes d'un procédé d'établissement d'une session multimédia entre le premier terminal utilisateur et un correspondant, qui peut être le deuxième serveur d'application, l'établissement de la session étant initié par le premier terminal utilisateur ;
- la Figure 6 est un organigramme illustrant les étapes d'un procédé d'établissement d'une session multimédia entre le premier terminal utilisateur et un correspondant, l'établissement de la session étant initié par le correspondant ; et
- la Figure 7 est un organigramme illustrant les étapes d'un procédé de transfert ou de réplication d'un flux média transmis par le correspondant au premier terminal utilisateur, cet organigramme pouvant représenter l'algorithme général du programme informatique au sens de l'invention.

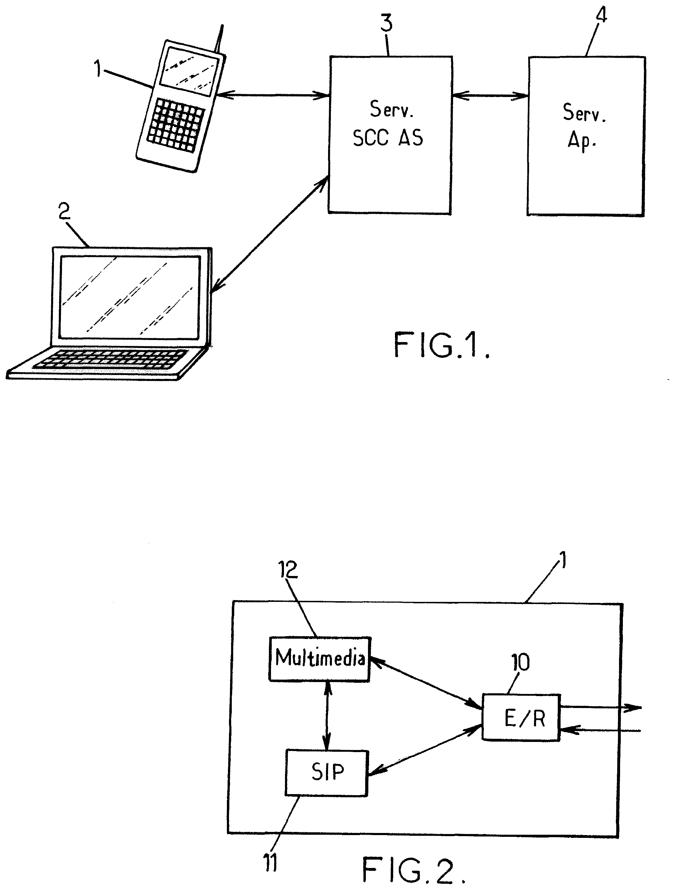

En se référant à la figure 1, on décrit un réseau informatique comportant un coeur de réseau de type IMS (Internet Protocol Multimedia Subsystem). On appelle « coeur de réseau » la partie principale d'un réseau informatique, qui concentre et transporte les flux de données entre des réseaux affluents. L'architecture IMS est une architecture multimédia ouverte qui utilise le protocole SIP (Session Initiation Protocol). Le protocole SIP permet d'établir, de modifier et de terminer des sessions multimédia. Le protocole SIP est un protocole du type requête/réponse dans le sens où, pour chaque message émis par une source, il y a au moins une réponse associée du destinataire confirmant la réception du message envoyé.

Le réseau informatique comporte un premier terminal utilisateur 1, un deuxième terminal utilisateur 2, un premier serveur d'application 3, dit serveur SCC AS (Service Centralization and Continuity Application Server), et un deuxième serveur d'application 4.

Le premier terminal utilisateur 1 peut être, par exemple, un terminal de téléphonie mobile, un ordinateur portable, un assistant personnel numérique, ou autre. Dans l'exemple représenté le premier terminal utilisateur 1 est un terminal de téléphonie mobile appartenant à un utilisateur ayant souscrit à un service de transfert inter-terminal.

Comme représenté sur la figure 2, le premier terminal utilisateur 1 comporte un module d'émission-réception 10 configuré pour émettre une requête de transfert ou de réplication, vers un autre terminal, d'un flux média reçu par le terminal 1. La requête comprend des informations relatives au terminal destinataire du transfert ou de la réplication, par exemple le deuxième terminal utilisateur 2. La requête comprend également des informations relatives au flux média à transférer ou à répliquer. Le premier terminal utilisateur 1 comporte également un module SIP 11 configuré pour gérer les requêtes SIP, et un module multimédia 12 configuré pour permettre la lecture d'un flux média, par exemple d'une vidéo.

De manière similaire, le deuxième terminal utilisateur 2 peut être un terminal de téléphonie mobile, un ordinateur portable, un assistant personnel numérique, ou autre. Dans l'exemple représenté le deuxième terminal utilisateur 2 est un ordinateur portable, qui peut appartenir au même utilisateur ou à un utilisateur différent. Le deuxième terminal utilisateur 2 comprend par exemple des modules similaires aux modules du premier terminal utilisateur 1.

Le serveur SCC AS 3 a pour fonction de servir d'intermédiaire lors de l'établissement d'une session multimédia entre un terminal d'un utilisateur ayant souscrit au service de transfert inter-terminal, par exemple le premier terminal utilisateur 1, et un correspondant, par exemple le deuxième serveur d'application 4. Le serveur 3 permet ainsi par la suite de réaliser des opérations de transfert et de réplication. On appelle opération de transfert une opération de remplacement du terminal 1 par un autre terminal pour la réception d'un flux média. On appelle opération de réplication une opération de copie d'un flux média envoyé au terminal 1 vers un autre terminal.

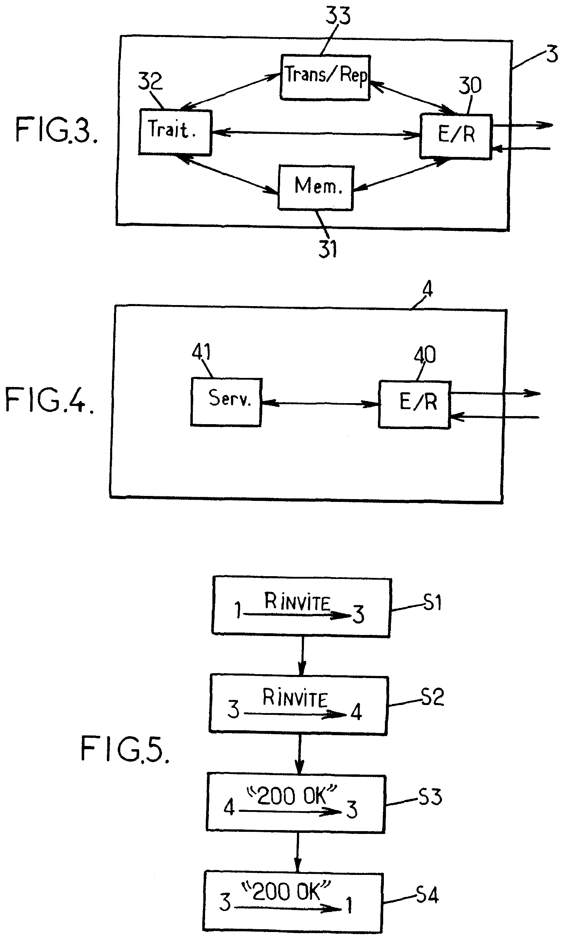

Comme représenté sur la figure 3, le serveur 3 comprend un module d'émission-réception 30 configuré pour recevoir une requête de transfert ou de réplication émise par un terminal d'un utilisateur ayant souscrit au service de transfert inter-terminal, par exemple le terminal 1. Le module d'émission-réception 30 est en outre configuré pour recevoir, lors de l'établissement d'une session multimédia, par exemple entre le terminal 1 et le serveur d'application 4, un message, émis par le serveur 4, contenant un ensemble d'éléments d'information relatifs à des opérations de transfert ou de réplication autorisées pour la session multimédia.

Le serveur 3 comporte un module de mémoire 31 configuré pour mémoriser l'ensemble d'éléments d'information reçu. Le serveur 3 comprend également un module de traitement 32 configuré pour comparer des informations contenues dans une requête de transfert ou de réplication, en particulier des informations relatives au terminal destinataire du transfert ou de la réplication, avec un ensemble d'éléments d'information relatifs à des opérations de transfert ou de réplication autorisées pour la session multimédia. Le module de traitement 32 est en outre configuré pour déterminer, en fonction de la comparaison, si l'opération de transfert ou de réplication est autorisée.

Le serveur 3 comprend également un module de transfert et de réplication 33 configuré pour réaliser une opération de transfert ou de réplication d'un flux média lorsque l'opération a été déterminée comme autorisée par le module de traitement 32.

Le serveur d'application 4 est un exemple de correspondant au sens de l'invention. Comme représenté sur la figure 4, le serveur d'application 4 comprend un module d'émission-réception 40 configuré pour émettre, lors de l'établissement d'une session multimédia, par exemple entre le premier terminal 1 et le serveur 4, un message contenant un ensemble d'éléments d'information relatifs à des opérations de transfert ou de réplication autorisées pour la session multimédia.

Le serveur d'application 4 comprend en outre un module de service 41 hébergeant une logique de service, par exemple un service de fourniture de vidéo et/ou de musique.

En se référant à la figure 5, on décrit ci-dessous un procédé d'établissement d'une session multimédia entre le terminal 1 et un correspondant, par exemple le serveur d'application 4, l'établissement de la session étant initié par le terminal 1.

A l'étape S1, le terminal 1 envoie au serveur 3 une requête d'établissement de session, appelée requête INVITE, pour demander l'établissement d'une session multimédia entre le terminal 1 et le serveur d'application 4. On notera que la requête INVITE est transmise au serveur 3 car l'utilisateur du terminal 1 a souscrit au service de transfert inter-terminal.

A l'étape S2, le serveur 3 reçoit la requête INVITE et génère une autre requête INVITE à destination du serveur d'application 4.

A l'étape S3, le serveur d'application 4 reçoit la requête INVITE. En réponse à la réception de la requête INVITE, le serveur d'application 4 génère un message de réponse, appelé message « 200 OK », pour confirmer l'établissement de la session entre le serveur d'application 4 et le terminal 1.

Le message de réponse contient, outre les éléments classiques d'un message SIP « 200 OK », un ensemble d'éléments d'information destiné à indiquer les opérations de transfert et/ou de réplication inter-terminal autorisées pour cette session multimédia. L'ensemble des éléments d'information peut être inséré dans le message SIP « 200 OK » par le biais d'un en-tête SIP dédié à cet effet, ou, en variante, sous forme d'un document XML (Extensible Markup Language) inclus dans le message SIP « 200 OK ».

L'ensemble d'éléments d'information présente une sémantique prédéterminée. Par exemple, l'ensemble d'éléments d'information peut comporter :
- un élément d'information « a=transfer-restriction:same-terminal » pour interdire le transfert et la réplication du flux média vers un autre terminal, et/ou
- un élément d'information « a=transfer-restriction:same-user » pour interdire le transfert et la réplication du flux média vers un autre terminal appartenant à un autre utilisateur, et/ou
- un élément d'information « a=transfer-restriction:tv » pour limiter le transfert et la réplication du flux média vers un terminal de type télévision, des éléments d'information similaires pouvant être utilisés pour limiter le transfert et la réplication du flux média vers des terminaux d'un certain type, par exemple téléphone mobile, ordinateur, ou autre, et/ou
- un élément d'information « a=replication-limit: terminals=n » pour limiter le nombre de terminaux vers lesquels le flux média peut être répliqué, l'entier n correspondant au nombre maximal de réplications, et/ou
- un élément d'information « a=replication-limit: users=n » pour limiter le nombre d'utilisateurs vers lesquels le flux média peut être répliqué, l'entier n correspondant au nombre maximal d'utilisateurs.

La sémantique permet également de préciser à quel(s) type(s) de média chacune des opérations autorisées ou interdites s'applique, c'est-à-dire de préciser, pour chaque élément d'information, s'il s'applique à un flux audio et/ou vidéo et/ou texte par exemple. Il est ainsi possible, notamment, d'interdire le transfert et la réplication vers un autre terminal pour le flux vidéo, et, d'interdire le transfert et la réplication vers un autre utilisateur et de limiter la réplication à deux terminaux, pour le flux audio. Dans cet exemple, le serveur 4 insère dans la partie du message SIP concernant le flux vidéo un élément d'information « a=transfer-restriction:same-terminal », et dans la partie du message SIP concernant le flux audio un élément d'information « a=transfer-restriction:same-user » et un élément d'information « a=replication-limit: terminals=2 ».

Lorsque le message de réponse a été généré, le serveur 4 émet le message de réponse à destination du serveur 3.

A l'étape S4, le serveur 3 reçoit le message de réponse, le décode et mémorise dans la base de données 31 l'ensemble d'éléments d'information insérés dans le message de réponse.

Puis, le serveur 3 génère un message de réponse à destination du terminal 1. La session multimédia est alors établie. L'utilisateur peut alors, via le module multimédia 12, visualiser un flux média, par exemple une vidéo ou un enregistrement audio, délivré par le serveur d'application 4.

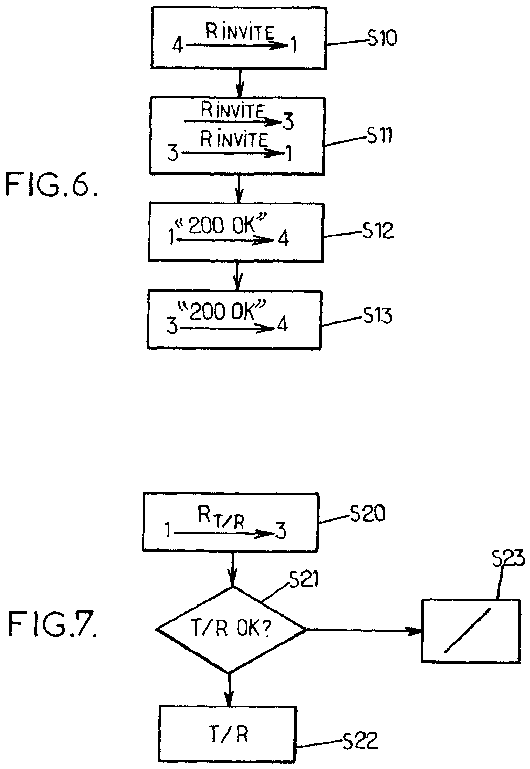

En se référant à la figure 6, on décrit ci-dessous un procédé d'établissement d'une session multimédia entre le terminal 1 et un correspondant, par exemple le serveur d'application 4, l'établissement de la session étant initié par le correspondant.

A l'étape S10, le serveur d'application 4 envoie une requête d'établissement de session, appelée requête INVITE, à destination du terminal 1.

La requête INVITE contient, outre les éléments classiques d'une requête SIP INVITE, un ensemble d'éléments d'information destiné à indiquer les opérations de transfert et/ou de réplication inter-terminal autorisées pour cette session multimédia.

L'ensemble d'éléments d'information est construit de manière similaire à ce qui a été décrit pour l'étape S3. En outre, comme décrit pour cette étape, l'ensemble d'éléments d'information peut être inséré dans la requête SIP INVITE par le biais d'un en-tête SIP dédié à cet effet, ou, en variante, sous forme d'un document XML (Extensible Markup Language) inclut dans la requête SIP INVITE.

A l'étape S11, le serveur 3 intercepte la requête INVITE destinée au terminal 1, car l'utilisateur du terminal 1 a souscrit au service de transfert inter-terminal. Le serveur 3 décode la requête et mémorise dans la base de données 31 l'ensemble d'éléments d'information insérés dans la requête. Puis, le serveur 3 génère une requête INVITE à destination du terminal 1.

Ainsi, le serveur d'application 4 n'a pas besoin de savoir si le terminal 1 bénéficie du service de transfert inter-terminal. En effet, si c'est le cas, l'ensemble d'élément d'information sera reçu et pris en compte par le serveur 3, sinon il sera tout simplement ignoré.

A l'étape S12, le terminal 1 reçoit la requête INVITE. En réponse à la réception de la requête INVITE, le terminal 1 génère un message de réponse, appelé message « 200 OK », pour confirmer l'établissement de la session entre le serveur d'application 4 et le terminal 1. Puis, le terminal 1 transmet le message de réponse à destination du serveur 3.

A l'étape S13, le serveur 3 reçoit le message de réponse et génère un message de réponse à destination du serveur 4. La session multimédia est alors établie. L'utilisateur peut alors, via le module multimédia 12, visualiser un flux média, par exemple une vidéo ou un enregistrement audio, mémorisé sur le serveur d'application 4.

En se référant à la figure 7, on décrit ci-dessous un procédé de transfert ou de réplication d'un flux média transmis par le correspondant, dans l'exemple le serveur d'application 4, au premier terminal utilisateur 1. En d'autres termes, on suppose qu'une session multimédia a été préalablement établie entre le premier terminal utilisateur 1 et le serveur d'application 4, et que l'utilisateur du premier terminal 1 souhaite effectuer une opération de transfert ou de réplication d'un flux média vers un autre terminal, par exemple le terminal 2.

A l'étape S20, le premier terminal utilisateur 1 émet à destination du serveur 3 une requête de transfert ou de réplication. La requête contient notamment des informations relatives au terminal destinataire du transfert ou de la réplication, dans l'exemple le deuxième terminal utilisateur 2. La requête contient également des informations relatives au flux media à transférer ou à répliquer.

A l'étape S21, le serveur 3 reçoit la requête, la décode et compare les informations relatives au terminal destinataire 2 et au flux média à transférer ou à répliquer avec l'ensemble d'éléments d'information mémorisé pendant l'établissement de la session, c'est-à-dire à l'étape S4 ou à l'étape S11.

Puis, le serveur 3 détermine, en fonction de la comparaison, si l'opération de transfert ou de réplication doit être autorisée ou interdite. Lorsque l'opération de transfert ou de réplication doit être autorisée, le procédé passe à l'étape S22. Lorsque l'opération de transfert ou de réplication doit être interdite, le procédé passe à l'étape S23.

A l'étape S22, le serveur 3 réalise l'opération de transfert ou de réplication du flux média vers le deuxième terminal utilisateur 2.

A l'étape S23, le serveur 3 rejette la requête et ne réalise pas l'opération de transfert ou de réplication.

Ce procédé permet ainsi d'empêcher une opération de transfert ou de réplication d'un flux média lorsqu'elle est contraire à des instructions provenant du serveur d'application 4, bien que celui-ci ne participe pas aux étapes du procédé de transfert ou de réplication. Il permet en d'autres termes à un propriétaire d'un serveur d'application d'exercer un contrôle sur la diffusion d'un contenu multimédia délivré par le serveur d'application.

On suppose par exemple qu'un premier utilisateur et un deuxième utilisateur regardent une vidéo sur le téléphone mobile du premier utilisateur, et que le deuxième utilisateur souhaite regarder la fin de la vidéo sur un autre terminal, par exemple une télévision.

A l'étape S20, une requête de transfert ou de réplication est émise par le téléphone mobile pour demander le transfert ou la réplication de la vidéo sur la télévision.

A l'étape S21, le serveur SCC reçoit la requête et la compare à un ensemble d'éléments d'information reçu du serveur d'application contenant la vidéo lors de l'établissement de la session multimédia. Ainsi, si le fournisseur de la vidéo refuse que cette vidéo soit affichée sur un terminal autre qu'un téléphone mobile, le serveur SCC rejettera la requête et n'effectuera pas l'opération de transfert ou de réplication demandée. En effet, l'opérateur de réseau, propriétaire du serveur SCC, ne doit permettre l'opération que si le fournisseur de la vidéo autorise qu'il soit affiché sur un terminal autre que le mobile, faute de quoi l'opérateur de réseau pourrait enfreindre l'accord de diffusion qu'il a avec le fournisseur de contenu. Cette autorisation peut dépendre du type de vidéo et de l'abonnement que l'utilisateur a souscrit auprès du fournisseur.

Bien entendu, la présente invention ne se limite pas aux formes de réalisation décrites ci-avant à titre d'exemples ; elle s'étend à d'autres variantes.

## Revendications

1. Procédé de traitement de données pour limiter, lors d'une session multimédia impliquant un premier terminal utilisateur (1), des opérations de transfert ou de réplication d'un flux média vers d'autres terminaux utilisateurs, le procédé comprenant des étapes consistant à :
a) Recevoir (S21) une requête de transfert ou de réplication d'un flux média émise par le premier terminal utilisateur (1), ladite requête contenant des informations relatives à un deuxième terminal utilisateur (2), destinataire du transfert ou de la réplication, et des informations relatives au flux media à transférer ou à répliquer,
b) Comparer (S21) lesdites informations relatives au deuxième terminal utilisateur (2) et au flux media à transférer ou à répliquer avec un ensemble d'éléments d'information relatifs à des opérations de transfert ou de réplication autorisées pour ladite session multimédia, et déterminer, en fonction de la comparaison, si l'opération de transfert ou de réplication est autorisée, et
c) lorsque l'opération de transfert ou de réplication est autorisée, réaliser (S22) l'opération de transfert ou de réplication du flux média vers ledit deuxième terminal utilisateur (2),
d) une étape préalable d'établissement (S1, S2, S3, S4, S10, S11, S12, S13) d'une session multimédia entre ledit premier terminal utilisateur (1) et un correspondant (4), ladite étape préalable comportant une opération (S3, S10) de réception d'un message, émis par ledit correspondant (4), contenant un ensemble d'éléments d'information relatifs à des opérations de transfert ou de réplication autorisées pour ladite session multimédia.

2. Procédé selon la revendication 1, **caractérisé en ce que** ledit message est un message SIP, l'ensemble d'éléments d'information étant inséré dans ledit message par le biais d'un en-tête SIP.

3. Procédé selon la revendication 1, **caractérisé en ce que** ledit message est un message SIP, l'ensemble d'éléments d'information étant inséré dans ledit message sous la forme d'un document XML.

4. Procédé selon l'une des revendications 1 à 3, **caractérisé en ce que** l'établissement de la session est initié par ledit premier terminal utilisateur (1), l'ensemble d'éléments d'information étant inséré dans un message SIP de type « 200 OK ».

5. Procédé selon l'une des revendications 1 à 3, **caractérisé en ce que** l'établissement de la session est initié par ledit correspondant (4), l'ensemble d'éléments d'information étant inséré dans un message SIP de type « INVITE ».

6. Procédé selon l'une quelconque des revendications 1 à 5, **caractérisé en ce que** ledit ensemble d'éléments d'information comprend un élément d'information pour interdire le transfert et la réplication du flux média vers un autre terminal, et/ou un élément d'information pour interdire le transfert et la réplication du flux média vers un autre terminal appartenant à un autre utilisateur, et/ou un élément d'information pour limiter le transfert et la réplication du flux média vers un terminal d'un type prédéterminé, et/ou un élément d'information pour limiter le nombre de terminaux vers lesquels le flux média peut être répliqué, et/ou un élément d'information pour limiter le nombre d'utilisateurs vers lesquels le flux média peut être répliqué.

7. Procédé selon l'une quelconque des revendications 1 à 6, **caractérisé en ce qu'**un élément d'information est associé à un flux média prédéterminé, l'ensemble d'éléments d'information pouvant contenir des éléments d'information respectivement associés à plusieurs flux média de la session multimedia.

8. Programme informatique comportant des instructions pour la mise en oeuvre du procédé selon l'une quelconque des revendications 1 à 7 lorsque ce programme est exécuté par un processeur.

9. Serveur (3) configuré pour limiter, lors d'une session multimédia impliquant un premier terminal utilisateur (1), des opérations de transfert ou de réplication d'un flux média vers d'autres terminaux utilisateurs, le serveur comprenant :
- un module de réception (30) configuré pour recevoir une requête de transfert ou de réplication d'un flux média émise par le premier terminal utilisateur (1), ladite requête contenant des informations relatives à un deuxième terminal utilisateur (2), destinataire du transfert ou de la réplication, et des informations relatives au flux media à transférer ou à répliquer,
- un module de traitement (32) configuré pour comparer lesdites informations relatives au deuxième terminal utilisateur (2) et au flux media à transférer ou à répliquer avec un ensemble d'éléments d'information relatifs à des opérations de transfert ou de réplication autorisées pour ladite session multimédia, et pour déterminer, en fonction de la comparaison, si l'opération de transfert ou de réplication est autorisée,
- un module de transfert et de réplication (33) configuré pour réaliser l'opération de transfert ou de réplication du flux média vers ledit deuxième terminal utilisateur (2) lorsque ladite opération a été déterminée comme autorisée,
- le module de réception (30) étant configuré pour recevoir, lors de l'établissement d'une session multimédia entre le premier terminal utilisateur et un correspondant, un message, émis par le correspondant, contenant un ensemble d'éléments d'information relatifs à des opérations de transfert ou de réplication autorisées pour la session multimédia,
- un module de mémoire configuré pour mémoriser l'ensemble des éléments d'information.

10. Serveur selon la revendication 9, **caractérisé en ce que** ledit module de réception (30) est configuré pour recevoir, lors de l'établissement d'une session multimédia entre ledit premier terminal utilisateur (1) et un correspondant (4), un message, émis par ledit correspondant (4), contenant un ensemble d'éléments d'information relatifs à des opérations de transfert ou de réplication autorisées pour ladite session multimédia, ledit serveur (3) comportant un module de mémoire (31) configuré pour mémoriser ledit ensemble d'éléments d'information.

11. Système comportant un serveur (3) selon l'une des revendications 9 ou 10, et un premier terminal utilisateur (1) comportant un module d'émission (10) configuré pour émettre, à destination dudit serveur (3), une requête de transfert ou de réplication d'un flux média, ladite requête contenant des informations relatives à un deuxième terminal utilisateur (2), destinataire du transfert ou de la réplication.

12. Système selon la revendication 11, **caractérisé en ce qu'**il comporte en outre un deuxième serveur (4) comportant un module d'émission (40) configuré pour émettre, lors de l'établissement d'une session multimédia entre ledit premier terminal utilisateur (1) et ledit deuxième serveur (4), un message contenant un ensemble d'éléments d'information relatifs à des opérations de transfert ou de réplication autorisées pour ladite session multimédia.

## Patentansprüche

1. Verfahren zur Verarbeitung von Daten, um bei einer Multimediasitzung, die ein erstes Benutzerendgerät (1) impliziert, Vorgänge zur Übertragung oder Spiegelung eines Medienstroms zu anderen Benutzerendgeräten zu begrenzen, wobei das Verfahren die folgenden Schritte umfasst, darin bestehend:
a) einen Antrag auf Übertragung oder Spiegelung eines Medienstroms, der von dem ersten Benutzerendgerät (1) gesandt wird, zu empfangen (S21), wobei der Antrag Informationen zu einem zweiten Benutzerendgerät (2), für das die Übertragung oder Spiegelung bestimmt ist, und Informationen zu dem zu übertragenden oder zu spiegelnden Medienstrom enthält,
b) die Informationen zu dem zweiten Benutzerendgerät (2) und dem zu übertragenden oder zu spiegelnden Medienstrom mit einer Gesamtheit von Informationselementen zu Übertragungs- oder Spiegelungsvorgängen, die für die Multimediasitzung gestattet sind, zu vergleichen (S21), und in Abhängigkeit von dem Vergleich zu bestimmen, ob der Übertragungs- oder Spiegelungsvorgang gestattet ist, und
c) wenn der Übertragungs- oder Spiegelungsvorgang gestattet ist, den Übertragungs- oder Spiegelungsvorgang des Medienstroms zu dem zweiten Benutzerendgerät (2) durchzuführen (S22),
d) einen vorherigen Schritt der Erstellung (S1, S2, S3, S4, S10, S11, S12, S13) einer Multimediasitzung zwischen dem ersten Benutzerendgerät (1) und einem Korrespondenten (4), wobei der vorherige Schritt einen Vorgang (S3, S10) des Empfangs einer Nachricht umfasst, die von dem Korrespondenten (4) gesandt wird und eine Gesamtheit von Informationselementen zu gestatteten Übertragungs- oder Spiegelungsvorgängen für die Multimediasitzung enthält.

2. Verfahren nach Anspruch 1, **dadurch gekennzeichnet, dass** die Nachricht eine SIP-Nachricht ist, wobei die Gesamtheit von Informationselementen in die Nachricht über einen SIP-Header eingesetzt wird.

3. Verfahren nach Anspruch 1, **dadurch gekennzeichnet, dass** die Nachricht eine SIP-Nachricht ist, wobei die Gesamtheit von Informationselementen in die Nachricht in Form eines XML-Dokuments eingesetzt wird.

4. Verfahren nach einem der Ansprüche 1 bis 3, **dadurch gekennzeichnet, dass** die Erstellung der Sitzung durch das erste Benutzerendgerät (1) initiiert wird, wobei die Gesamtheit von Informationselementen in eine SIP-Nachricht vom Typ "200 OK" eingesetzt wird.

5. Verfahren nach einem der Ansprüche 1 bis 3, **dadurch gekennzeichnet, dass** die Erstellung der Sitzung durch den Korrespondenten (4) initiiert wird, wobei die Gesamtheit von Informationselementen in eine SIP-Nachricht vom Typ "INVITE" eingesetzt wird.

6. Verfahren nach einem der Ansprüche 1 bis 5, **dadurch gekennzeichnet, dass** die Gesamtheit von Informationen ein Informationselement umfasst, um die Übertragung und die Spiegelung des Medienstroms zu einem anderen Endgerät zu untersagen, und/oder ein Informationselement, um die Übertragung und die Spiegelung des Medienstroms zu einem anderen Endgerät, das einem anderen Benutzer angehört, zu untersagen, und/oder ein Informationselement, um die Übertragung und die Spiegelung des Medienstroms zu einem Endgerät eines vorbestimmten Typs zu begrenzen, und/oder ein Informationselement, um die Anzahl von Endgeräten, zu denen der Medienstrom gespiegelt werden kann, zu begrenzen, und/oder ein Informationselement, um die Anzahl von Benutzern, zu denen der Medienstrom gespiegelt werden kann, zu begrenzen.

7. Verfahren nach einem der Ansprüche 1 bis 6, **dadurch gekennzeichnet, dass** ein Informationselement einem vorbestimmten Medienstrom zugeordnet ist, wobei die Gesamtheit von Informationselementen Informationselemente enthalten kann, die jeweils mehreren Medienströmen der Multimediasitzung zugeordnet sind.

8. Computerprogramm, umfassend Anweisungen für den Einsatz des Verfahrens nach einem der Ansprüche 1 bis 7, wenn dieses Programm von einem Prozessor ausgeführt wird.

9. Server (3), der eingerichtet ist, um bei einer Multimediasitzung, die in erstes Benutzerendgerät (1) impliziert, Vorgänge der Übertragung oder Spiegelung eines Medienstroms zu anderen Benutzerendgeräten zu begrenzen, wobei der Server umfasst:
- ein Empfangsmodul (30), das eingerichtet ist, um einen Antrag auf Übertragung oder Spiegelung eines Medienstroms, der von dem ersten Benutzerendgerät (1) gesandt wird, zu empfangen, wobei der Antrag Informationen zu einem zweiten Benutzerendgerät (2), für das die Übertragung oder Spiegelung bestimmt ist, und Informationen zu dem zu übertragenden oder zu spiegelnden Medienstrom enthält,
- ein Verarbeitungsmodul (32), das eingerichtet ist, um die Informationen zu dem zweiten Benutzerendgerät (2) und dem zu übertragenden oder zu spiegelnden Medienstrom mit einer Gesamtheit von Informationselementen zu Übertragungs- oder Spiegelungsvorgängen, die für die Multimediasitzung gestattet sind, zu vergleichen, und in Abhängigkeit von dem Vergleich zu bestimmen, ob der Übertragungs- oder Spiegelungsvorgang gestattet ist,
- ein Übertragungs- und Spiegelungsmodul (33), das eingerichtet ist, wenn der Übertragungs- oder Spiegelungsvorgang als gestattet bestimmt wurde, den Übertragungs- oder Spiegelungsvorgang des Medienstroms zu dem zweiten Benutzerendgerät (2) durchzuführen,
- wobei das Empfangsmodul (30) eingerichtet ist, um bei der Erstellung einer Multimediasitzung zwischen dem ersten Benutzerendgerät und einem Korrespondenten eine von dem Korrespondenten gesandte Nachricht zu empfangen, die eine Gesamtheit von Informationselementen zu Übertragungs- oder Spiegelungsvorgängen, die für die Multimediasitzung gestattet sind, enthält,
- ein Speichermodul, das eingerichtet ist, um die Gesamtheit der Informationselemente zu speichern.

10. Server nach Anspruch 9, **dadurch gekennzeichnet, dass** das Empfangsmodul (30) eingerichtet ist, um bei der Erstellung einer Multimediasitzung zwischen dem ersten Benutzerendgerät (1) und einem Korrespondenten (4) eine von dem Korrespondenten (4) gesandte Nachricht zu empfangen, die eine Gesamtheit von Informationselementen zu gestatteten Übertragungs- oder Spiegelungsvorgängen für die Multimediasitzung enthält, wobei der Server (3) ein Speichermodul (31) umfasst, das eingerichtet ist, um die Gesamtheit von Informationselementen zu speichern.

11. System, umfassend einen Server (3) nach einem der Ansprüche 9 oder 10, und ein erstes Benutzerendgerät (1), umfassend ein Sendemodul (10), das eingerichtet ist, um in Richtung des Servers (3) einen Antrag auf Übertragung oder Spiegelung eines Medienstroms zu senden, wobei der Antrag Informationen zu einem zweiten Benutzerendgerät (2), für das die Übertragung oder Spiegelung bestimmt ist, enthält.

12. System nach Anspruch 11, **dadurch gekennzeichnet, dass** es ferner einen zweiten Server (4) umfasst, umfassend ein Sendemodul (40), das eingerichtet ist, um bei der Erstellung einer Multimediasitzung zwischen dem ersten Benutzerendgerät (1) und dem Server (4) eine Nachricht zu senden, die eine Gesamtheit von Informationselementen zu gestatteten Übertragungs- oder Spiegelungsvorgängen für die Multimediasitzung enthält.

## Claims

1. Data processing method for limiting operations of transferring or of replicating a media flow to other user terminals during a multimedia session involving a first user terminal (1), the method comprising steps of:
a) receiving (S21) a request to transfer or to replicate a media flow, said request being transmitted by the first user terminal (1), said request containing information relating to a second user terminal (2) that is the intended recipient of the transfer or of the replication, and information relating to the media flow to be transferred or to be replicated,
b) comparing (S21) said information relating to the second user terminal (2) and to the media flow to be transferred or to be replicated with a set of information elements relating to transfer or replication operations that are authorized for said multimedia session, and determining, on the basis of the comparison, whether the transfer or replication operation is authorized, and
c) when the transfer or replication operation is authorized, performing (S22) the operation of transferring or of replicating the media flow to said second user terminal (2),
d) a prior step (S1, S2, S3, S4, S10, S11, S12, S13) of establishing a multimedia session between said first user terminal (1) and a correspondent (4), said prior step including an operation (S3, S10) of receiving a message, transmitted by said correspondent (4), containing a set of information elements relating to transfer or replication operations that are authorized for said multimedia session.

2. Method according to Claim 1, **characterized in that** said message is a SIP message, the set of information elements being inserted into said message by way of a SIP header.

3. Method according to Claim 1, **characterized in that** said message is a SIP message, the set of information elements being inserted into said message in the form of an XML document.

4. Method according to one of Claims 1 to 3, **characterized in that** the establishment of the session is initiated by said first user terminal (1), the set of information elements being inserted into a "200 OK" SIP message.

5. Method according to one of Claims 1 to 3, **characterized in that** the establishment of the session is initiated by said correspondent (4), the set of information elements being inserted into an "INVITE" SIP message.

6. Method according to any one of Claims 1 to 5, **characterized in that** said set of information elements comprises an information element for barring the transfer and the replication of the media flow to another terminal, and/or an information element for barring the transfer and the replication of the media flow to another terminal belonging to another user, and/or an information element for limiting the transfer and the replication of the media flow to a terminal of a predetermined type, and/or an information element for limiting the number of terminals to which the media flow is able to be replicated, and/or an information element for limiting the number of users to whom the media flow is able to be replicated.

7. Method according to any one of Claims 1 to 6, **characterized in that** an information element is associated with a predetermined media flow, the set of information elements being able to contain information elements that are respectively associated with a plurality of media flows of the multimedia session.

8. Computer program including instructions for implementing the method according to any one of Claims 1 to 7 when this program is executed by a processor.

9. Server (3) configured to limit operations of transferring or of replicating a media flow to other user terminals during a multimedia session involving a first user terminal (1), the server comprising:
- a reception module (30) configured to receive a request to transfer or to replicate a media flow, said request being transmitted by the first user terminal (1), said request containing information relating to a second user terminal (2) that is the intended recipient of the transfer or of the replication, and information relating to the media flow to be transferred or to be replicated,
- a processing module (32) configured to compare said information relating to the second user terminal (2) and to the media flow to be transferred or to be replicated with a set of information elements relating to transfer or replication operations that are authorized for said multimedia session, and to determine, on the basis of the comparison, whether the transfer or replication operation is authorized,
- a transfer and replication module (33) configured to perform the operation of transferring or of replicating the media flow to said second user terminal (2) when said operation has been determined as authorized,
- the reception module (30) being configured to receive, during the establishment of a multimedia session between the first user terminal and a correspondent, a message, transmitted by the correspondent, containing a set of information elements relating to transfer or replication operations that are authorized for the multimedia session,
- a memory module configured to store the set of information elements in memory.

10. Server according to Claim 9, **characterized in that** said reception module (30) is configured to receive, during the establishment of a multimedia session between said first user terminal (1) and a correspondent (4), a message, transmitted by said correspondent (4), containing a set of information elements relating to transfer or replication operations that are authorized for said multimedia session, said server (3) including a memory module (31) configured to store said set of information elements in memory.

11. System including a server (3) according to either of Claims 9 and 10, and a first user terminal (1) including a transmission module (10) configured to transmit, to said server (3), a request to transfer or to replicate a media flow, said request containing information relating to a second user terminal (2) that is the intended recipient of the transfer or of the replication.

12. System according to Claim 11, **characterized in that** it furthermore includes a second server (4) including a transmission module (40) configured to transmit, during the establishment of a multimedia session between said first user terminal (1) and said second server (4), a message containing a set of information elements relating to transfer or replication operations that are authorized for said multimedia session.
